(19) Europäisches Patentamt
European Patent Office
Office européen des brevets

(11) **EP 4 273 967 B1**

(12) **EUROPEAN PATENT SPECIFICATION**

(45) Date of publication and mention of the grant of the patent:
**06.05.2026  Bulletin 2026/19**

(21) Application number: **22907752.4**

(22) Date of filing: **24.11.2022**

(51) International Patent Classification (IPC):
*H01M 4/62* (2006.01)      *H01M 4/36* (2006.01)
*H01M 4/38* (2006.01)      *H01M 10/052* (2010.01)
*C01B 32/05* (2017.01)      *H01M 4/02* (2006.01)
*H01M 4/583* (2010.01)

(52) Cooperative Patent Classification (CPC):
**C01B 32/05; H01M 4/366; H01M 4/38; H01M 4/583; H01M 10/052; Y02E 60/10**

(86) International application number:
**PCT/KR2022/018700**

(87) International publication number:
**WO 2023/113283 (22.06.2023 Gazette 2023/25)**

(54) **PREPARATION METHOD FOR A POROUS CARBON MATERIAL HAVING IMPURITIES REMOVED THEREFROM**

HERSTELLUNGSVERFAHREN FÜR EIN PORÖSES KOHLENSTOFFMATERIAL, AUS DEM VERUNREINIGUNGEN ENTFERNT WURDEN

PROCÉDÉ DE PRÉPARATION D'UN MATÉRIAU CARBONÉ POREUX DONT SONT ÉLIMINÉES DES IMPURETÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.12.2021  KR 20210180557**
**15.11.2022  KR 20220152348**

(43) Date of publication of application:
**08.11.2023  Bulletin 2023/45**

(73) Proprietor: **LG Energy Solution, Ltd.**
**Seoul 07335 (KR)**

(72) Inventors:
- **SONG, Myeongjun**
  **Daejeon 34122 (KR)**
- **PARK, Intae**
  **Daejeon 34122 (KR)**
- **CHOI, Ran**
  **Daejeon 34122 (KR)**
- **LEE, Hyunsoo**
  **Daejeon 34122 (KR)**
- **KIM, Yonghwi**
  **Daejeon 34122 (KR)**

- **PARK, Seonghyo**
  **Daejeon 34122 (KR)**
- **YANG, Seungbo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 217 454      EP-A1- 3 855 532**
**JP-B2- 6 623 214      KR-A- 20180 048 309**
**KR-A- 20200 117 752      KR-A- 20200 136 656**

- **LI G C ET AL: "Sulfur/activated-conductive carbon black composites as cathode materials for lithium/sulfur battery", JOURNAL OF POWER SOURCES, ELSEVIER, AMSTERDAM, NL, vol. 240, 13 May 2013 (2013-05-13), pages 598 - 605, XP028577167, ISSN: 0378-7753, DOI: 10.1016/ J.JPOWSOUR.2013.02.095**

- DU ZHENZHEN ET AL: "The correlation between carbon structures and electrochemical properties of sulfur/carbon composites for Li-S batteries", JOURNAL OF POWER SOURCES, ELSEVIER, AMSTERDAM, NL, vol. 341, 7 December 2016 (2016-12-07), pages 139 - 146, XP029863967, ISSN: 0378-7753, DOI: 10.1016/J.JPOWSOUR.2016.11.102
- GORDIN MIKHAIL L. ET AL: "Bis(2,2,2-trifluoroethyl) Ether As an Electrolyte Co-solvent for Mitigating Self-Discharge in Lithium-Sulfur Batteries", vol. 6, no. 11, 11 June 2014 (2014-06-11), US, pages 8006 - 8010, XP055869199, ISSN: 1944-8244, Retrieved from the Internet <URL:https://pubs.acs.org/doi/pdf/10.1021/am501665s> DOI: 10.1021/am501665s
- MENENDEZ J A ET AL: "Modification of the surface chemistry of active carbons by means of microwave-induced treatments", CARBON, ELSEVIER OXFORD, GB, vol. 37, no. 7, 1 January 1999 (1999-01-01), pages 1115 - 1121, XP004167651, ISSN: 0008-6223, DOI: 10.1016/S0008-6223(98)00302-9
- DU ZHENZHEN; XU JIN; JIN SONG; SHI YUCHEN; GUO CHENGKUN; KONG XIANGHUA; ZHU YANWU; JI HENGXING: "The correlation between carbon structures and electrochemical properties of sulfur/carbon composites for Li-S batteries", JOURNAL OF POWER SOURCES, ELSEVIER, AMSTERDAM, NL, vol. 341, 7 December 2016 (2016-12-07), AMSTERDAM, NL, pages 139 - 146, XP029863967, ISSN: 0378-7753, DOI: 10.1016/j.jpowsour.2016.11.102
- GORDIN MIKHAIL L., DAI FANG, CHEN SHURU, XU TERRENCE, SONG JIANGXUAN, TANG DUIHAI, AZIMI NASIM, ZHANG ZHENGCHENG, WANG DONGHAI: "Bis(2,2,2-trifluoroethyl) Ether As an Electrolyte Co-solvent for Mitigating Self-Discharge in Lithium–Sulfur Batteries", APPLIED MATERIALS & INTERFACES, AMERICAN CHEMICAL SOCIETY, US, vol. 6, no. 11, 11 June 2014 (2014-06-11), US, pages 8006 - 8010, XP055869199, ISSN: 1944-8244, DOI: 10.1021/am501665s
- ZHU, Y. ; MURALI, S. ; STOLLER, M.D. ; VELAMAKANNI, A. ; PINER, R.D. ; RUOFF, R.S.: "Microwave assisted exfoliation and reduction of graphite oxide for ultracapacitors", CARBON, ELSEVIER OXFORD, GB, vol. 48, no. 7, 1 June 2010 (2010-06-01), GB, pages 2118 - 2122, XP026969601, ISSN: 0008-6223

**Description**

[Technical Field]

The present invention relates to a porous carbon material from which impurities were removed, its preparation method, a positive electrode for a lithium-sulfur battery comprising the carbon material as a positive electrode active material and a lithium-sulfur battery, and more particularly to a porous carbon material from which impurities were removed, which can improve the charging overvoltage problem of a lithium-sulfur battery by applying a porous carbon material, from which impurities such as moisture were removed through pre-treatment, to a positive electrode for the lithium-sulfur battery, and its preparation method, a positive electrode for a lithium-sulfur battery comprising the carbon material as a positive electrode active material and a lithium-sulfur battery.

[Background Art]

As interest in energy storage technology continues to increase, since its application is expanding from energy for mobile phones, tablets, laptops and camcorders to even energy for electric vehicles (EVs) and hybrid electric vehicles (REVs), research and development of electrochemical devices are gradually increasing. The field of electrochemical devices is an area that is receiving the most attention in this respect. Among them, the development of secondary batteries such as a lithium-sulfur battery capable of being charged/discharged has become a focus of attention. In recent years, in developing these batteries, in order to improve capacity density and specific energy, it has led to research and development in designs for new electrodes and batteries.

Among these electrochemical devices, a lithium-sulfur battery (Li-S battery) has a high energy density (theoretical capacity) and thus is in the spotlight as a next-generation secondary battery that can replace a lithium-ion battery. In such a lithium-sulfur battery, a reduction reaction of sulfur and an oxidation reaction of lithium metal occur during discharging. In this case, sulfur forms lithium polysulfide (LiPS) having a linear structure from $S_8$ having a ring structure. This lithium-sulfur battery is characterized by showing a stepwise discharging voltage until the polysulfide is completely reduced to $Li_2S$.

However, the biggest obstacle of the lithium-sulfur battery in the commercialization is the lifetime, and the charging/discharging efficiency is reduced during the charging/discharging process, and the lifetime of the battery is deteriorated. There are various reasons for the deterioration of the lifetime of the lithium-sulfur battery, such as side reactions of electrolytes (sedimentation of by-products following the decomposition of the electrolyte), instability of lithium metal (dendrite grows on the lithium negative electrode, resulting in a short circuit), and sedimentation of by-products from the positive electrode (leaching of the lithium polysulfide from the positive electrode).

That is, in a battery using a sulfur-based compound as a positive electrode active material and an alkali metal such as lithium as a negative electrode active material, leaching and shuttle phenomena of lithium polysulfide are occurred during the charging/discharging, and the lithium polysulfide is transferred to the negative electrode, reducing the capacity of the lithium-sulfur battery, and as a result, there is a big problem that the lithium-sulfur battery has a reduced lifetime and reduced reactivity. That is, since the polysulfide leached from the positive electrode has a high solubility in the organic electrolyte, unwanted movement (PS shuttling) may occur toward the negative electrode through the electrolyte, and as a result, a decrease in capacity due to irreversible loss of the positive electrode active material and a decrease in the lifetime of the battery due to deposition of sulfur particles on the surface of lithium metal due to side reactions are occurred.

On the other hand, in order to build a lithium-sulfur battery with a high energy density of about 400 Wh/kg or more or 600 Wh/L or more, an electrolyte and positive electrode active material system that can operate even under conditions of high loading (about 4.0 mAh/cm$^2$ or more) and low porosity (about 60% or less) is required. That is, the behavior of such a lithium-sulfur battery can vary greatly depending on the electrolyte. The electrolyte when sulfur in the positive electrode is leached into the electrolyte in the form of lithium polysulfide (LiPS) is called catholyte and the electrolyte when sulfur hardly leaches out in the form of lithium polysulfide is called sparingly solvating electrolyte (SSE). Since the lithium-sulfur battery utilizing the existing catholyte system is dependent on the liquid phase reaction through the production of an intermediate product (intermediate polysulfide) in the form of $Li_2S_x$ (catholyte type), there is a problem that it does not fully utilize sulfur's high theoretical discharging capacity (1,675 mAh/g), and rather, the lifetime of the battery is drastically reduced by the degradation of the battery due to leaching of polysulfide.

On the other hand, recently, it was confirmed that a sparingly solvating electrolyte (SSE) electrolyte system that can suppress the leaching of polysulfide has been developed, and thus 90% or more of sulfur's theoretical discharging capacity can be utilized, especially when a carbon material with a high specific surface area (BET) of 200 to 1,700 m$^2$/g is applied as a support for sulfur. However, in the case of this carbon material, there is a problem that since it contains a relatively large amount of impurities such as moisture due to its high specific surface area, the side reaction of the electrode is increased, causing a charging overvoltage phenomenon and thus the availability is lowered. In order to solve this problem, in the art, the carbon material with a high specific surface area is heat-treated in a furnace, but in this case, the time required is long and it is difficult to effectively remove the impurities.

KR 10-2020-0117752 discloses a lithium-sulfur secondary battery comprising: a positive electrode; a negative electrode; a separator; and an electrolyte, wherein the positive electrode includes a positive electrode active material layer including a sulfur-carbon composite and a conductive material, the conductive material has a BET specific surface area of 50 m$^2$/g or more and has a pore volume of 0.5 cm$^3$/g or more, and also the conductive material is selected from the group consisting of carbon black, acetylene black, ketjen black, channel black, furnace black, lamp black, thermal black, denka black, a carbon nanotube, graphene and a combination thereof.

EP 3 855 532 A1 discloses a lithium secondary battery which specifies conditions of a cathode and an electrolyte and, further, comprises a separator that is surface-modified by thermally treating a carbon material or includes a molybdenum disulfide coating layer.

Li et al. Journal of Power Sources, 240 (2013) 598-606 discloses sulfur/activated-conductive carbon black composites as cathode materials for lithium/sulfur battery.

EP 3 217 454 A1 discloses a conductive material manufacturing method and a lithium secondary battery that includes a conductive material manufactured using the same, and the conductive material manufacturing method comprises the step for removing metal impurities in a conductive material by radiating microwaves to the conductive material containing the metal impurities to convert the metal impurities into metal oxides.

Du et al., Journal of Power Sources, 341 (2017) 139-146 investigates the correlation between carbon structures and electrochemical properties of sulfur/carbon composites for Li-S batteries.

Gordin et al., ACS Appl. Mater. Interfaces 2014, 6, 8006-8010 discloses Bis(2,2,2-trifluoroethyl) Ether As an Electrolyte Co-solvent for Mitigating Self-Discharge in Lithium-Sulfur Batteries.

Accordingly, there is a need for a method to improve the charging overvoltage problem by effectively removing impurities such as moisture contained in the carbon material with a high specific surface area, even while using the SSE electrolyte system.

[Disclosure]

[Technical Problem]

Therefore, it is an object of the present invention to provide a method for preparing a porous carbon material from which impurities such as moisture were removed through pre-treatment, which can improve the charging overvoltage problem of a battery by applying the porous carbon material to a positive electrode for a lithium-sulfur battery.

[Technical Solution]

The above problems are solved in accordance with the subject-matter of the independent claims. Further embodiments result from the subclaims and the following written description.

Described herein is a porous carbon material having a specific surface area of 200 to 1,700 m$^2$/g, from which impurities were removed through pre-treatment using microwaves.

The present invention provides a method for preparing a porous carbon material from which impurities were removed, which comprises the steps of (a) putting a porous carbon material having a specific surface area of 200 to 1,700 m$^2$/g into an airtight container, and then purging by injecting an inert gas; and (b) applying microwaves to the porous carbon material, wherein in step (b), the microwaves are applied to the porous carbon material under the condition that MPPT according to Equation 1 below is 2,000 to 10,000 W*s/g:

[Equation 1]

$$MPPT(W*s/g) = Microwave\ Power(W) \times Times(S)/Weight\ of\ carbon\ material(g)$$

wherein the Times is the amount of time in seconds during which the microwaves are applied, and it is in excess of 10 seconds.

Further described herein is a positive electrode for a lithium-sulfur battery comprising, as a positive electrode active material, a sulfur-carbon composite formed by supporting sulfur in the porous carbon material from which impurities were removed.

Further described herein is a lithium-sulfur battery comprising the positive electrode for the lithium-sulfur battery described above; a negative electrode; a separator interposed therebetween; and an electrolyte comprising a first solvent containing a fluorine-based ether compound, a second solvent containing a glyme-based compound and a lithium salt.

[Advantageous Effects]

According to the porous carbon material from which impurities such as moisture were removed, its preparation method (according to the present invention), the positive electrode for the lithium-sulfur battery comprising the carbon material as a positive electrode active material, and the lithium-sulfur battery, the charging overvoltage problem of the battery can be improved by applying the porous carbon material, from which impurities were removed through pretreatment, to the positive electrode for the lithium-sulfur battery. In addition, by grafting a positive electrode for a lithium-sulfur battery containing the impurity-removed porous carbon material described above as a positive electrode active material, to a sparingly solvating electrolyte (SSE) electrolyte system (discharging capacity ~1,600 mAh/gs) rather than an existing catholyte electrolyte system (discharging capacity: ~1,200 mAh/gs), there is an advantage that the discharging capacity of sulfur (1,675 mAh/g) can be utilized by 90% or more and the energy density is also kept high at about 400 Wh/kg or more or 600 Wh/L or more.

[Description of Drawings]

FIG. 1 is a graph of TGA analysis for checking whether impurities are removed from the porous carbon materials prepared by the method according to an embodiment of the present invention and a comparative example.
FIG. 2 is a graph showing the temperature profile over time when irradiating microwaves under the same conditions on porous carbon material and sulfur-carbon composite.
FIG. 3 is a graph of TGA analysis showing the degree of the decrease in weight due to temperature increase by performing TGA analysis on a porous carbon material prepared by the method according to an embodiment of the present invention and a sulfur-carbon composite according to a comparative example.

[Best Mode]

Hereinafter, the present invention will be described in detail.

The porous carbon material described herein which is prepared by the method according to the present invention is characterized in that the specific surface area is 200 to 1,700 $m^2/g$ and the impurities are removed through pre-treatment using microwaves.

In order to build a lithium-sulfur battery with a high energy density of about 400 Wh/kg or more or 600 Wh/L or more, an electrolyte and positive electrode active material system that can operate even under conditions of high loading (about 4.0 mAh/cm$^2$ or more) and low porosity (about 60% or less) is required. In addition, as such an electrolyte system, a sparingly solvating electrolyte (SSE) electrolyte system has been developed that complements the problem of the electrolyte when sulfur from the positive electrode is leached into the electrolyte in the form of lithium polysulfide (LiPS) (i.e., which can inhibit the leaching of polysulfide). In addition, particularly, it was confirmed that when a carbon material with a high specific surface area (BET) of 200 to 1,700 $m^2/g$ is applied to the positive electrode active material as a sulfur carrier and grafted to the SSE electrolyte system, 90% or more of the theoretical discharging capacity of sulfur can be utilized (That is, the utilization rate of sulfur is 90% or more. The 'utilization rate of sulfur' is specifically the ratio of discharging capacity (mAh) per weight (gram) of elemental sulfur comprised in the positive electrode of the battery to 1,675 mAh/g, which is the theoretical capacity per weight of sulfur. For example, when the discharging capacity per weight of elemental sulfur present in the positive electrode of the lithium-sulfur battery is 1,600 mAh/g, the utilization rate of sulfur is 95.5% (1,600/1,675)).

However, in the case of this carbon material, there is a problem that since it also contains a relatively large amount of impurities such as moisture (specifically, other impurities such as moisture contained in the carbon material and unnecessary functional groups present in the inside and on the surface of the carbon material) due to its high specific surface area, the side reaction of the electrode is increased, causing a charging overvoltage phenomenon and thus the availability is lowered. In order to solve this problem, in the art, the carbon material with a high specific surface area is heat-treated in a furnace, but in this case, the time required is long and it is difficult to effectively remove the impurities.

Accordingly, the present applicant has increased the availability of a carbon material having a high specific surface area, by effectively removing impurities such as moisture contained in the carbon material with a high specific surface area through pre-treatment using microwaves, even while using the SSE electrolyte system. In addition, the present applicant made it possible to prepare a uniform positive electrode active material by improving the ability of the carbon material to support sulfur, thereby improving the charging overvoltage problem.

As in the present invention, if pretreatment is performed by applying (or irradiating) microwaves to a porous carbon material having a high specific surface area, rapid heating and stopping are possible due to energy transfer rather than conventional heat transfer. Particularly, there is an advantage that since the yield of converting the energy incident to the porous carbon material into thermal energy is high, the efficiency is higher than that of conventional ones, for example, the time required to remove impurities is short, and so on.

Meanwhile, although the present invention is to remove the impurities contained in the carbon material by applying microwaves to the porous carbon material, if the microwaves are applied in a state in which the porous carbon material and another material (for example, sulfur) are combined, it is impossible to selectively remove the impurities contained in the carbon material. For example, if the microwaves are applied to a sulfur-carbon composite in which the porous carbon material and sulfur are combined, it is impossible to remove only the impurities contained in the carbon material because even sulfur is vaporized and volatilized. This is because, when the microwaves are applied, the rate of increase in the temperature of carbon is faster than that of sulfur, and the energy generated when the temperature of carbon rises is transferred to the surrounding sulfur, and at this time, sulfur is vaporized from a lower temperature before the impurities contained in carbon are removed.

The porous carbon material is characterized in that the specific surface area is 200 to 1,700 $m^2/g$ and the impurities are removed through pre-treatment using microwaves, as described above. If the porous carbon material is used in fields other than batteries, there is no particular limitation as long as the impurities are removed by pre-treatment using microwaves even if the specific surface area is out of the above range. However, in the lithium-sulfur battery using the SSE electrolyte system to utilize 90% or more of the theoretical discharging capacity of sulfur, the performance of the battery can be maximized only when the carbon material having the specific surface area within the above range is used. In addition, the pore volume of the porous carbon material may be 1.5 $cm^3/g$ or more. If the pore volume of the porous carbon material is less than 1.5 $cm^3/g$, it may be difficult to implement a battery having a high energy density due to a decrease in the amount of sulfur supported.

In addition, the related carbon material to which the microwaves are applied may be, for example, carbon nanotubes; graphene (in particular, multilayer graphene flake, MGF); graphite; carbon black, such as carbon black, acetylene black, Ketjen black, Denka black, thermal black, channel black, furnace black, lamp black, etc.; carbon fiber; or a mixture containing two or more of them.

The pre-treatment using the microwaves is characterized in that the microwaves are applied to the porous carbon material under the condition that the MPPT according to Equation 1 is 2,000 to 10,000 W*s/g.

[Equation 1]

$$MPPT(W*s/g) = Microwave\ Power(W) \times Times(S)/Weight\ of\ carbon\ material(g)$$

wherein the Times is the amount of time in seconds during which the microwaves are applied, and it is in excess of 10 seconds. In addition, the porous carbon material is preferably in the form of a powder.

The MPPT value of the carbon nanotubes is 2,000 to 10,000 W*s/g, but when it exceeds about 2,800 W*s/g, there may be no practical benefit because the impurities are no longer removed. In addition, if the MPPT value of the carbon nanotubes is less than 2,000 W*s/g, it is impossible or insufficient to remove the impurities, and thus it is difficult to achieve the object of the present invention for the purpose of improving the charging overvoltage. If the MPPT value of the carbon nanotubes exceeds 10,000 W*s/g, it may lead to ignition.

The MPPT value of the graphene (in particular, multilayer graphene flake, MGF) is also 2,000 to 10,000 W*s/g. However, if it exceeds about 5,300 W*s/g, there may be no practical benefit because the impurities are no longer removed. In addition, if the MPPT value of the graphene is less than 2,000 W*s/g, it is impossible or insufficient to remove the impurities, and thus it is difficult to achieve the object of the present invention for the purpose of improving the charging overvoltage. If the MPPT value of the graphene exceeds 10,000 W*s/g, it may lead to ignition.

The MPPT value of the carbon black is also 2,000 to 10,000 W*s/g. However, if it exceeds about 3,500 W*s/g, there may be no practical benefit because the impurities are no longer removed. In addition, if the MPPT value of the carbon black is less than 2,000 W*s/g, it is impossible or insufficient to remove the impurities, and thus it is difficult to achieve the object of the present invention for the purpose of improving the charging overvoltage. If the MPPT value of the carbon black exceeds 10,000 W*s/g, it may lead to ignition.

The MPPT value of the Ketjen black is also 2,000 to 10,000 W*s/g, preferably 5,000 to 9,900 W*s/g. If it exceeds 9,900 W*s/g, there may be no practical benefit because the impurities are no longer removed. In addition, if the MPPT value of the Ketjen black is less than 2,000 W*s/g, it is impossible or insufficient to remove the impurities, and thus it is difficult to achieve the object of the present invention for the purpose of improving the charging overvoltage. If the MPPT value of the Ketjen black exceeds 10,000 W*s/g, it may lead to ignition. Accordingly, when applying the microwaves to the carbon material, microwave energy must be applied according to the range of MPPT corresponding to each carbon material.

The porous carbon material having the specific surface area and pore volume as described above and to which microwaves were applied is characterized in that impurities of 90 to 100%, preferably 99 to 100%, of the total impurities contained in the carbon material are removed. The impurities comprise moisture, and specifically, comprise moisture contained in the porous carbon material and other impurities such as unnecessary functional groups present in the inside and on the surface of the carbon material. Meanwhile, even if the impurities are removed by applying the microwaves to the carbon material having a high specific surface area as described above, it can be said that the reabsorption of moisture during storage is inevitable.

Meanwhile, if the pre-treatment using the microwaves is performed on the porous carbon material having a high specific surface area as in the present invention (that is, in other words, if only the carbon material is processed by the microwaves before manufacturing the sulfur-carbon composite included in the positive electrode active material of the lithium-sulfur battery), the lithium-sulfur battery can control the content of sulfur participating in the actual reaction during operation more quickly and accurately than the existing ones. For example, if sulfur and a carbon material that has not been subjected to microwave pre-treatment are mixed in a weight ratio of 70 : 30, and the impurities are contained in the carbon material at a content of 5% by weight, the actual weight ratio of sulfur to the carbon material is 70 : 28.5 (i.e., 70 : (30×0.95)). That is, the discharging capacity of the lithium-sulfur battery is calculated based on the content of sulfur contained in the battery. Accordingly, if the pre-treatment using the microwaves is performed on the carbon material having a high specific surface area as in the present invention, the content of sulfur and the carbon material contained in the positive electrode active material can be more accurately identified. That is, in other words, there is no impurities in the porous carbon material, and thus there is no error in the content of sulfur contained in the positive electrode active material and the carbon material.

Next, the method according to the present invention for preparing the porous carbon material from which impurities were removed as described above will be described. The method for preparing the porous carbon material from which impurities were removed comprises the steps of (a) putting a porous carbon material having a specific surface area of 200 to 1,700 $m^2/g$ into an airtight container, and then purging by injecting an inert gas and (b) applying microwaves to the porous carbon material.

As the airtight container, a typical container that is sealed and capable of being purged even when an inert gas is injected, such as a glass jar, may be exemplified. In addition, the inert gas is a general inert gas such as nitrogen (N2), and there is no particular limitation on injection conditions of the inert gas. In addition, step (b) is characterized in that the microwaves are applied to the porous carbon material under the condition that the MPPT according to Equation 1 below is 2,000 to 10,000 W*s/g.

[Equation 1]

$$MPPT(W*s/g) = \text{Microwave Power}(W) \times \text{Times}(S) / \text{Weight of carbon material}(g)$$

wherein, the Times is the amount of time in seconds during which the microwaves are applied, and it is in excess of 10 seconds. In addition, the porous carbon material is preferably in the form of a powder.

Subsequently, the positive electrode for the lithium-sulfur battery will be described. The positive electrode for the lithium-sulfur battery comprises, as a positive electrode active material, a sulfur-carbon composite in which sulfur is supported in the porous carbon material from which the impurities were removed.

The positive electrode for the lithium-sulfur battery comprises a positive electrode active material, a binder, and a conductive material. In addition, the positive electrode active material may comprise elemental sulfur ($S_8$), a sulfur-based compound, or a mixture thereof, in addition to the porous carbon material from which impurities were removed, as described above, and the sulfur-based compound may specifically comprise $Li_2S_n(n≥1)$, or an organic sulfur compound, etc. In addition, as described above, it is preferable to use, as a positive electrode active material, sulfur-carbon composites (($C_2S_x)_n$: x=2.5 ~ 50, n≥2) containing (compositing) a porous carbon material from which impurities were removed and sulfur.

The sulfur-carbon composites may have a particle size of 1 to 100 $\mu$m. If the size of the particles of the sulfur-carbon composite is less than 1 $\mu$m, the resistance between the particles is increased, and thus the overvoltage may occur at the electrode of the lithium-sulfur battery. If the size of the particles exceeds 100 $\mu$m, since the surface area per unit weight is reduced, the wetting area with the electrolyte in the electrode and the reaction site with lithium ions are reduced, and since the amount of electrons transferred relative to the size of the composite is reduced, the reaction may be delayed, and thus the discharge capacity of the battery may be reduced.

Sulfur (S) may be contained in an amount of 60 to 90% by weight, preferably 65 to 85% by weight, and more preferably 65 to 80% by weight, based on the total weight of the positive electrode active material. If sulfur is used in an amount of less than 60% by weight based on the total weight of the positive electrode, there may be a problem that the energy density of the battery is decreased. If sulfur is used in an amount exceeding 90% by weight, there may be a problem that the conductivity in the electrode is lowered and the stability of the electrode is lowered.

The positive electrode active material containing sulfur and the carbon material as described above may be contained in an amount of 80 to 99 parts by weight, preferably 90 to 95 parts by weight, based on 100 parts by weight of the total weight of the positive electrode. If the content of the positive electrode active material is less than 80 parts by weight based on 100 parts by weight of the total weight of the positive electrode, there may be a problem that the energy density of the battery is decreased. If the content of the positive electrode active material exceeds 99 parts by weight, there may be a problem that the conductivity in the electrode is lowered and the stability of the electrode is lowered.

The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinyl acetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder exceeds 50 parts by weight, the adhesive strength is improved but the content of the positive electrode active material may be reduced, thereby lowering the capacity of the battery.

The electrically conductive material comprised in the positive electrode is not particularly limited as long as it has excellent electrical conductivity without causing side reactions in the internal environment of the battery and causing chemical changes in the battery. As the electrically conductive material, graphite or electrically conductive carbon may be used, and, for example, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; carbon nanotubes; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives may be typically used alone or in combination of two or more, but are not necessarily limited thereto.

The electrically conductive material may be added in an amount of 0.5 to 10 parts by weight, preferably 0.5 to 5 parts by weight based on 100 parts by weight of the total weight of the positive electrode, but may not be included in the positive electrode of the present invention. If the content of the electrically conductive material exceeds 10 parts by weight, that is, if it is too much, the amount of the positive electrode material is relatively small, and thus the capacity and the energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, and a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped $SnO_2$), FTO (F doped $SnO_2$), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

Finally, the lithium-sulfur battery according to the present invention will be described. The lithium-sulfur battery comprises the positive electrode for the lithium-sulfur battery as described above, a negative electrode, a separator interposed therebetween and an electrolyte comprising a first solvent containing a fluorine-based ether compound, a second solvent containing a glyme-based compound and a lithium salt.

The lithium-sulfur battery of the present invention uses a sparingly solvating electrolyte (SSE) electrolyte system, but comprises, as a positive electrode active material, a porous carbon material with a high specific surface area (BET) of 200 to 1,700 $m^2$/g and from which impurities were removed by applying microwaves, and has a high energy density of about 400 Wh/kg or more or 600 Wh/L or more, while being able to utilize more than 90%, preferably 94 to 100% of the theoretical discharging capacity of sulfur.

Hereinafter, each of the first solvent containing a fluorine-based ether compound, the second solvent containing a glyme-based compound and the lithium salt contained in the electrolyte of the lithium-sulfur battery will be described in detail.

The first solvent is an electrolyte solvent containing a fluorine-based ether compound, and has an effect of inhibiting dissolution of polysulfide and decomposition of the solvent, thereby improving the coulombic efficiency (C.E.) of the battery and ultimately playing a role in improving the lifetime of the battery. More specifically, the first solvent containing a fluorine-based ether compound has excellent structural stability due to fluorine substitution compared to general organic solvents containing alkanes, and thus has very high stability. Accordingly, if this is used in the electrolyte solution of the lithium-sulfur battery, the stability of the electrolyte solution can be greatly improved, thereby improving the lifetime performance of the lithium-sulfur battery.

Examples of the fluorine-based ether compound may be at least one hydrofluoro ether-based (HFE type) compound selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropylethyl ether, 1H,1H,2'H,3H-decafluorodipropyl ether and 1H,1H,2'H-perfluorodipropyl ether.

The second solvent is an electrolyte solvent containing a glyme-based compound (but not containing fluorine), which not only dissolves the lithium salt so that the electrolyte has lithium-ion conductivity, but also plays a role of leaching sulfur, which is a positive electrode active material, so that the electrochemical reaction with lithium can proceed smoothly.

Specific examples of the glyme-based compound may be, but are not limited to, at least one selected from the group consisting of dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether, and among them, it is preferable to use dimethoxyethane.

The lithium salt is an electrolyte salt used to increase ion conductivity, and may be used without limitation as long as it is commonly used in the art. Specific examples of the lithium salt may be at least one from the group consisting of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li, (CF$_3$SO$_2$)$_2$NLi, (C$_2$F$_5$SO$_2$)$_2$NLi, (SO$_2$F)$_2$NLi, (CF$_3$SO$_2$)$_3$CLi, lithium chloroborane, lithium lower aliphatic carboxylic acid having 4 or less carbon atoms, lithium tetraphenyl borate, and lithium imide.

The concentration of the lithium salt may be determined in consideration of ion conductivity and the like, and may be, for example, 0.1 to 2 M, preferably 0.5 to 1 M, and more preferably 0.5 to 0.75 M. If the concentration of the lithium salt is less than the range above, it is difficult to ensure ion conductivity suitable for operating the battery. If the concentration of the lithium salt exceeds the range above, the viscosity of the electrolyte is increased, so that the mobility of lithium ions is deteriorated, or the decomposition reaction of the lithium salt itself is increased, thereby deteriorating the performance of the battery.

In the electrolyte containing the first solvent, the second solvent and the lithium salt as described above, the molar ratio of the lithium salt, the second solvent, and the first solvent may be 1 : 0.5 to 3 : 4.1 to 15. The electrolyte comprised in the lithium-sulfur battery contains the first solvent containing a fluorine-based ether compound in a higher content ratio compared to a second solvent containing a glyme-based compound, for example, the molar ratio of the lithium salt, the second solvent and the first solvent may be 1 : 2 : 4 to 13, 1 : 3 : 3 to 10, or 1 : 4 : 5 to 10. As such, if the first solvent containing a fluorine-based ether compound is contained in a higher content ratio than the second solvent containing a glyme-based compound, since it is possible to realize the capacity of the battery close to the theoretical capacity of sulfur by suppressing the generation of the polysulfide and there is an advantage in suppressing the decrease in the capacity of the battery due to the use of the battery, it is preferable to set it so that the first solvent containing a fluorine-based ether compound is comprised in a higher content ratio compared to the second solvent containing a glyme-based compound.

The negative electrode comprised in the lithium-sulfur battery is a lithium-based metal, and may further comprise a current collector on one side of the lithium-based metal. As the current collector, a negative electrode current collector may be used. The negative electrode current collector is not particularly limited as long as it has high electrical conductivity without causing chemical changes in the battery. The negative electrode current collector may be selected from the group consisting of copper, aluminum, stainless steel, zinc, titanium, silver, palladium, nickel, iron, chromium, alloys thereof, and combinations thereof. The stainless steel may be surface treated with carbon, nickel, titanium or silver. As the alloy, an aluminum-cadmium alloy may be used, and in addition, calcined carbon, a non-conductive polymer surface-treated with an electrically conductive material, or an electrically conductive polymer may be used. In general, a thin copper plate is applied as the negative electrode current collector.

In addition, the shape of the negative electrode current collector can be various forms such as a film having or not having fine irregularities on its surface, sheet, foil, net, porous body, foam, nonwoven fabric and the like. In addition, the thickness of the negative electrode current collector is in the thickness range of 3 to 50 $\mu$m. If the thickness of the negative electrode current collector is less than 3 $\mu$m, the current collecting effect is lowered. On the other hand, if the thickness exceeds 50 $\mu$m, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without a particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylene such as high-density polyethylene, linear low-density polyethylene, low-density polyethylene, and ultra-high molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spun-bond or a melt-blown nonwoven fabric composed of long fibers.

The thickness of the separator is not particularly limited, but is preferably in the range of 1 to 100 $\mu$m, more preferably 5 to 50$\mu$m. If the thickness of the separator is less than 1 $\mu$m, the mechanical properties cannot be maintained. If the thickness of the separator exceeds 100 $\mu$m, the separator acts as a resistive layer, thereby deteriorating the performance of the battery. The pore size and porosity of the separator are not particularly limited, but it is preferable that the pore size is 0.1 to 50 $\mu$m and the porosity is 10 to 95%. If the separator has a pore size of less than 0.1 $\mu$m or a porosity of less than 10%, the separator acts as a resistive layer. If the separator has a pore size of exceeding 50 $\mu$m or a porosity of exceeding 95%, mechanical properties cannot be maintained.

The lithium-sulfur battery comprising the positive electrode, the negative electrode, the separator and the electrolyte, as described above can be manufactured through a process of facing the positive electrode with the negative electrode, interposing the separator between them, and then injecting the electrolyte solution.

On the other hand, the lithium-sulfur battery is applied to a battery cell used as a power source for a small device, and can be also particularly suitably used as a unit cell for a battery module, which is a power source for medium and large-sized devices. In this aspect, the present invention also provides a battery module comprising two or more lithium-sulfur batteries electrically connected (series or parallel). Of course, the quantity of lithium-sulfur batteries comprised in the battery module may be variously adjusted in consideration of the use and capacity of the battery module. Furthermore, described herein is a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto. However, it may be preferable that the lithium-sulfur battery is a battery for an aircraft used as an urban air mobility (UAM).

Hereinafter, preferred examples are presented to aid understanding of the present invention, but the following examples are merely illustrative of the present invention, and it is obvious to those skilled in the art that various changes and modifications are possible within the scope and spirit of the present invention, and it goes without saying that that these changes and modifications fall within the scope of the appended claims.

[Examples 1 to 8, Comparative Examples 1 to 4] Preparation of porous carbon material

A porous carbon material was put into a glass jar, and then nitrogen gas was injected to perform purging for 1 minute. Subsequently, microwaves were irradiated on the porous carbon material. In this case, the porous carbon materials used in Examples 1 to 8 and Comparative Examples 1 to 4 were as follows. In addition, the microwave energy value (MPPT) received by each unit carbon material used in Examples 1 to 8 and Comparative Examples 1 to 4 is shown in Table 1 below.

Table 1:

|  | Carbon material | MPPT(W*s/g) |
|---|---|---|
| Example 1 | carbon nanotube | 2,160 |
| Example 2 | multilayer graphene flake | 3,600 |
| Example 3 | carbon black | 3,120 |
| Example 4 | Ketjen black | 6,480 |
| Example 5 | carbon nanotube | 2,880 |
| Example 6 | multilayer graphene flake | 5,400 |
| Example 7 | carbon black | 3,600 |
| Example 8 | Ketjen black | 9,980 |
| Comparative Example 1 | carbon nanotubes | 1,440 |
| Comparative Example 2 | multilayer graphene flake | 1,800 |
| Comparative Example 3 | carbon black | 1,680 |
| Comparative Example 4 | Ketjen black | 12,960 |
| Comparative Example 5 | carbon nanotube | - |

- Example 1, Example 5, Comparative Example 1: carbon nanotubes having specific surface area of 270 $m^2$/g
- Example 2, Example 6, Comparative Example 2: multilayer graphene flake having specific surface area of 1,600 $m^2$/g
- Example 3, Example 7, Comparative Example 3: carbon black having specific surface area of 1,550 $m^2$/g
- Example 4, Example 8, Comparative Example 4: Ketjen black having specific surface area of 1,350 $m^2$/g.

[Comparative Example 5] Porous carbon material

Carbon nanotubes with a specific surface area of 270 $m^2$/g identical to those used in Example 1, Example 5 and Comparative Example 1 were prepared. That is, unlike Examples 1 to 8 and Comparative Examples 1 to 4, the carbon material was not irradiated with microwaves.

[Experimental Example 1] Evaluation of the removal rate of impurities contained in porous carbon material

The amount of impurities removed from each of the porous carbon materials prepared in Examples 1 to 8 and Comparative Examples 1 to 4 was measured, and the results are shown in Table 2 below. That is, it was confirmed how much the impurities contained in the carbon material were reduced after irradiating the microwaves. In addition, a precision balance (Model: ML204T/00, Manufacturer: Mettler Toledo) having a measurement unit of 0.1 mg was used for the measurement.

Table 2:

|  | Carbon material | MPPT (W*s/g) | Ratio of amount of impurities removed based on the total weight of carbon material (impurity removal rate) |
|---|---|---|---|
| Example 1 | carbon nanotubes | 2,160 | 5 wt.% (100 %) |
| Example 2 | multilayer graphene flake | 3,600 | 5 wt.% (100 %) |
| Example 3 | carbon black | 3,120 | 2.7 wt.% (100 %) |
| Example 4 | Ketjen black | 6,480 | 3 wt.% (100 %) |
| Example 5 | carbon nanotube | 2,880 | 5 wt.% (100 %) |
| Example 6 | multilayer graphene flake | 5,400 | 5 wt.% (100 %) |

(continued)

| | Carbon material | MPPT (W*s/g) | Ratio of amount of impurities removed based on the total weight of carbon material (impurity removal rate) |
|---|---|---|---|
| Example 7 | carbon black | 3,600 | 2.7 wt.% (100 %) |
| Example 8 | Ketjen black | 9,980 | 3 wt.% (100 %) |
| Comparative Example 1 | carbon nanotube | 1,440 | 4 wt.% (80 %) |
| Comparative Example 2 | multilayer graphene flake | 1,800 | 2.5 wt.% (50 %) |
| Comparative Example 3 | carbon black | 1,680 | 2 wt.% (74 %) |
| Comparative Example 4 | Ketjen black | 12,960 | 3 wt.% (100 %), occurrence of ignition phenomena |
| Comparative Example 5 | carbon nanotube | - | 0 wt.% (0 %) |

As a result of measuring the amount of impurities removed from each of the porous carbon materials prepared in Examples 1 to 8 and Comparative Examples 1 to 4 as described above, as shown in Table 1, it was confirmed that the impurities are completely removed from the porous carbon materials of Examples 1 to 8, where the microwave energy value received by the unit carbon material is set to 2,000 to 10,000 W*s/g. On the other hand, it was confirmed that the impurities are not sufficiently removed from the porous carbon materials of Comparative Examples 1 to 3, where the microwave energy value received by the unit carbon material is set to less than 2,000 W*s/g. In addition, in the case of Comparative Example 4, where the microwave energy value received by the unit carbon material was set to exceed 10,000 W*s/g, the impurities were completely removed as in Examples 1 to 8, but an ignition phenomenon was also occurred.

[Experimental Example 2] Confirmation of whether impurities are removed through thermal gravimetric analysis (TGA)

In order to check whether the impurities were removed from the porous carbon material manufactured in Example 1 above, TGA analysis (the temperature increase condition (R.T ~ 500 °C) of 10 °C/min, nitrogen atmosphere) was performed with the porous carbon material (not microwave-treated) of Comparative Example 5.

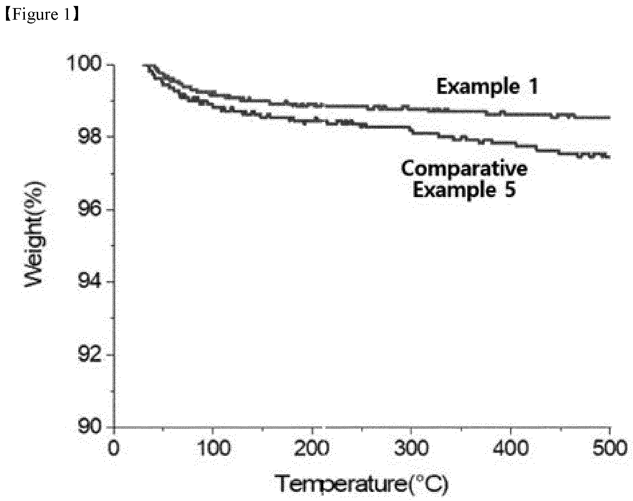

FIG. 1 is a graph of TGA analysis for checking whether impurities are removed from the porous carbon materials according to an embodiment of the present invention and a comparative example. As a result of TGA analysis of the porous carbon material prepared in Example 1 and the porous carbon material of Comparative Example 5, it was confirmed that in the case of the porous carbon material of Example 1 where the microwave energy value received by the unit carbon material is set to 2,000 to 10,000 W*s/g, the weight loss due to the increase in temperature is significantly smaller than that of the porous carbon material in Comparative Example 5 which is not irradiated with microwaves, as shown in FIG. 1. Accordingly, it can be seen that if a microwave energy value of 2,000 to 10,000 W*s/g is given to the porous carbon material, impurities such as moisture are removed (meanwhile, the reason for the decrease in weight from FIG. 1 to 100 °C is due to absorption of moisture during storage of the carbon material).

[Experimental Example 3] Confirmation of whether impurities are removed through elemental analysis (EA)

In order to check whether the impurities were removed from the porous carbon material prepared in Example 1, EA analysis was performed with an elemental analyzer (Model name: Flash 2000, Manufacturer: Thermo Scientific™) along with the porous carbon material (not microwave-treated) of Comparative Example 5, and the results are shown in Table 3 below.

Table 3:

| | Example 1 | Comparative Example 5 |
|---|---|---|
| C | 98 | 93.6 |
| H | ⟨ 1 | ⟨ 1 |
| N | - | ⟨ 1 |

(continued)

|  | Example 1 | Comparative Example 5 |
|---|---|---|
| O | ⟨ 1 | 1.5 |

As a result of EA analysis of the porous carbon material prepared in Example 1 and the porous carbon material of Comparative Example 5, it was confirmed that in the case of the porous carbon material of Example 1 where the microwave energy value received by the unit carbon material is set to 2,000 to 10,000 W*s/g, the content of carbon (C) is increased due to the removal of the impurities such as moisture.

[Comparative Example 6] Preparation of sulfur-carbon composite

A sulfur-carbon composite was prepared by mixing the carbon nanotubes of Comparative Example 5 that were not microwave-treated and sulfur (S) at a weight ratio of 75: 25, and then drying them. Subsequently, the prepared sulfur-carbon composite was placed in a glass jar, and then microwaves were irradiated (MPPT: 2,160 W*s/g) in the state where nitrogen gas was injected and purged for 1 minute.

[Experimental Example 4] Evaluation of temperature profile according to microwave irradiation time

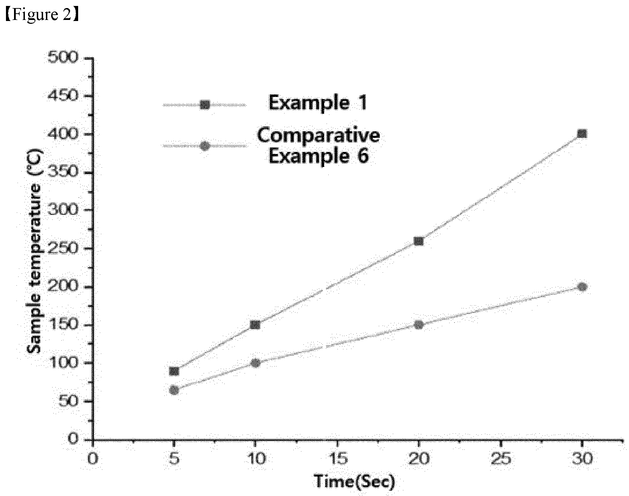

While irradiating microwaves (MPPT: 2,160 W*s/g) on the porous carbon material prepared in Example 1 and the sulfur-carbon composite prepared in Comparative Example 6, the temperature over time was measured with a thermocouple (306 data logger, Conrad Electronics, Hirschau, Germany), respectively, and the results are shown in FIG. 2. FIG. 2 is a graph showing the temperature profile over time when irradiating microwaves under the same conditions on porous carbon material and sulfur-carbon composite.

As a result of measuring the temperature in units of 5 seconds while irradiating microwaves on the porous carbon material of Example 1 and the sulfur-carbon composite of Comparative Example 6, it was confirmed that the temperature increase rate of the porous carbon material (Example 1) is very fast compared to that of the sulfur-carbon composite (Comparative Example 6), as shown in FIG. 2. In other words, when the microwaves were irradiated, the temperature increase rate of carbon is faster than that of sulfur, and thus the temperature of carbon rises first, and the energy generated when the temperature of carbon rises is transferred to sulfur and converted into energy for vaporization of sulfur. At this time, sulfur is vaporized from a low temperature before impurities contained in carbon are removed.

In other words, when microwaves are irradiated under the same MPPT conditions, in the case of the porous carbon material (Example 1), the temperature rises to about 400 °C based on the time point after 30 seconds of microwave irradiation, and the impurities in the carbon material are removed. On the other hand, the sulfur-carbon composite (Comparative Example 6) rises to about 200 °C (the temperature at which the volatilization of sulfur rapidly occurs) based on the time point after 30 seconds of microwave irradiation, and the impurities in the carbon material are volatilized together with sulfur. Therefore, when microwaves are applied to the sulfur-carbon composite (Comparative Example 6) itself, it is not only impossible to selectively remove only the impurities in the carbon material, but rather causes loss of sulfur, which inevitably adversely affects the performance of the battery. Therefore, it can be seen that even if microwaves are applied to the carbon material, the object of the present invention can be achieved only when applied only to the carbon material itself, not in a state in which it is composited with sulfur.

[Experimental Example 5] Thermogravimetric analysis (TGA)

In Experimental Example 2, it was confirmed that the impurities such as moisture are removed from the porous carbon material of Example 1 through thermogravimetric analysis (TGA). Also, for comparison and contrast with this, TGA analysis (the temperature increase condition (R.T ~ 500 °C) of 10 °C/min, nitrogen atmosphere) was also performed with the sulfur-carbon composite of Comparative Example 6.

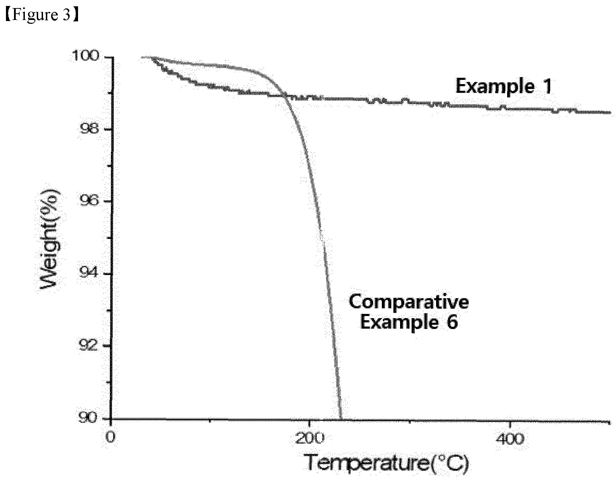

FIG. 3 is a graph of TGA analysis showing the degree of the decrease in weight due to temperature increase by performing TGA analysis on a porous carbon material according to an embodiment of the present invention and a sulfur-carbon composite according to a comparative example. As a result of TGA analysis of the porous carbon material of Example 1 and the sulfur-carbon composite of Comparative Example 6, it can be seen that in the case of the porous carbon material in Example 1, the decrease in weight due to temperature increase is significantly smaller than that of the sulfur-carbon composite in Comparative Example 6, as shown in FIG. 3. This is due to the fact that even if the microwaves are irradiated on the porous carbon material (Example 1) and the sulfur-carbon composite (Comparative Example 6) under the same MPPT conditions, in the case of the sulfur-carbon composite (Comparative Example 6), the impurities in the carbon material are volatilized with sulfur, as described in Experimental Example 4.

That is, it can be seen even through the results of this experiment that it is not only impossible to selectively remove only the impurities contained in the carbon material in the sulfur-carbon composite, but rather causes loss of sulfur, which inevitably adversely affects the performance of the battery. Therefore, it can be seen that even if microwaves are applied to the carbon material, the object of the present invention can be achieved only when applied only to the carbon material itself, not in a state in which it is composited with sulfur.

## Claims

1.  A method for preparing a porous carbon material from which impurities were removed, which comprises the steps of

    (a) putting a porous carbon material having a specific surface area of 200 to 1,700 $m^2/g$ into an airtight container, and then purging by injecting an inert gas; and
    (b) applying microwaves to the porous carbon material;
    wherein in step (b), the microwaves are applied to the porous carbon material under the condition that MPPT according to Equation 1 below is 2,000 to 10,000 W*s/g:

    [Equation 1]

    $$MPPT(W*s/g) = \text{Microwave Power(W)} \times \text{Times(S)} / \text{Weight of carbon material(g)}$$

    wherein the Times is the amount of time in seconds during which the microwaves are applied, and it is in excess of 10 seconds.

2.  The method for preparing a porous carbon material according to claim 1, wherein the porous carbon material is selected from the group consisting of carbon nanotubes; graphene (multilayer graphene flake, MGF); graphite; carbon black selected from the group consisting of carbon black, acetylene black, Ketjen black, Denka black, thermal black, channel black, furnace black and lamp black; carbon fiber; and a mixture containing two or more of them.

3.  The method for preparing a porous carbon material according to claim 2, wherein the porous carbon material is selected from the group consisting of carbon nanotubes, graphene (multilayer graphene flake, MGF), carbon black and Ketjen black.

4.  The method for preparing a porous carbon material according to claim 1, wherein the pore volume of the porous carbon material is 1.5 $cm^3/g$ or more.

## Patentansprüche

1.  Verfahren zur Herstellung eines porösen Kohlenstoffmaterials, aus dem Verunreinigungen entfernt wurden, das die folgenden Schritte umfasst:

    (a) Einbringen eines porösen Kohlenstoffmaterials mit einer spezifischen Oberfläche von 200 bis 1.700 $m^2$ /g in einen luftdichten Behälter und anschließendes Spülen durch Injizieren eines Inertgases; und
    (b) Anwenden von Mikrowellen auf das poröse Kohlenstoffmaterial;
    wobei in Schritt (b) die Mikrowellen auf das poröse Kohlenstoffmaterial unter der Bedingung angewendet werden, dass MPPT gemäß der nachstehenden Gleichung 1 2.000 bis 10.000 W*s/g beträgt:

    MPPT(W*s/g) = Mikrowellenleistung (W) $\times$ Zeit (S) / Gewicht des Kohlenstoffmaterials (g)         [Gleichung 1]

    wobei die Zeit die Zeitdauer in Sekunden ist, während der die Mikrowellen angewendet werden, und mehr als 10 Sekunden beträgt.

2.  Verfahren zur Herstellung eines porösen Kohlenstoffmaterials nach Anspruch 1, wobei das poröse Kohlenstoffmaterial ausgewählt ist aus der Gruppe bestehend aus Kohlenstoffnanoröhren, Graphen (mehrschichtige Graphenflocke, MGF); Graphit; Ruß, ausgewählt aus der Gruppe bestehend aus Ruß, Acetylenruß, Ketjenruß, Denkaruß, Thermalruß, Kanalruß, Ofenruß und Lampenruß; Kohlenstofffaser; und einer Mischung, die zwei oder mehr davon enthält.

3. Verfahren zur Herstellung eines porösen Kohlenstoffmaterials nach Anspruch 2, wobei das poröse Kohlenstoffmaterial ausgewählt ist aus der Gruppe bestehend aus Kohlenstoffnanoröhren, Graphen (mehrschichtige Graphenflocke, MGF), Ruß und Ketjenruß.

4. Verfahren zur Herstellung eines porösen Kohlenstoffmaterials nach Anspruch 1, wobei das Porenvolumen des porösen Kohlenstoffmaterials 1,5 cm$^3$ /g oder mehr beträgt.

**Revendications**

1. Procédé de préparation d'un matériau carboné poreux duquel des impuretés ont été éliminées, comprenant les étapes suivantes :

  (a) transfert d'un matériau carboné poreux ayant une superficie spécifique qui va de 200 à 1 700 m$^2$/g dans un récipient étanche à l'air puis réalisation d'une purge par injection d'un gaz inerte ; et
  (b) application de micro-ondes sur le matériau carboné poreux ;
  où à l'étape (b), les micro-ondes sont appliquées sur le matériau carboné poreux de sorte que le suivi du point de puissance maximale MPPT, calculé conformément à l'Équation 1 ci-dessous, va de 2 000 à 10 000 W*s/g :

  MPPT (W*s/g) = Puissance du générateur de micro-ondes (W) $\times$ Temps (s) / Poids du matériau carboné poreux (g)                    [Équation 1]

  où le Temps est la durée, en secondes, de l'application des micro-ondes et dépasse 10 secondes.

2. Procédé de préparation d'un matériau carboné poreux selon la revendication 1, où le matériau carboné poreux est sélectionné dans le groupe consistant en les suivants : nanotubes de carbone ; graphène (flocons de graphène multifeuillets, MGF) ; graphite ; noir de carbone sélectionné dans le groupe consistant en le noir de carbone, noir d'acétylène, Ketjen black, Denka black, noir thermique, noir tunnel, noir de four et noir de lampe ; fibre de carbone ; et mélange contenant deux ou plus de ceux-ci.

3. Procédé de préparation d'un matériau carboné poreux selon la revendication 2, où le matériau carboné poreux est sélectionné dans le groupe consistant en des nanotubes de carbone, un graphène (flocons de graphène multifeuillets, MGF), le noir de carbone et le Ketjen black.

4. Procédé de préparation d'un matériau carboné poreux selon la revendication 12, où le volume des pores du matériau carboné poreux est égal ou supérieur à 1,5 cm$^3$/g.

【Figure 1】

【Figure 2】

【Figure 3】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200117752
- EP 3855532 A1
- EP 3217454 A1

**Non-patent literature cited in the description**

- **LI et al.** *Journal of Power Sources*, 2013, vol. 240, 598-606
- **DU et al.** *Journal of Power Sources*, 2017, vol. 341, 139-146
- **GORDIN et al.** *ACS Appl. Mater. Interfaces*, 2014, vol. 6, 8006-8010